# FASCICULE DE BREVET EUROPEEN

(11) **EP 3 679 999 B1**
(45) Date de publication et mention de la délivrance du brevet: **07.07.2021**
(21) Numéro de dépôt: 19151001.5
(22) Date de dépôt: 09.01.2019
(51) Int. Cl.: B01D 1/28, B01D 3/34, B01D 3/38, C02F 1/04

(54) **PROCÉDÉ ET INSTALLATION DE TRAITEMENT D'UN LIQUIDE**
VERFAHREN UND ANLAGE ZUR BEHANDLUNG EINER FLÜSSIGKEIT
METHOD AND INSTALLATION FOR PROCESSING A LIQUID

(43) Date de publication de la demande: 15.07.2020
(73) Titulaire: France EVAPORATION, 59139 Noyelles les Seclin (FR)
(72) Inventeur: DEHAY, ALAIN, 59139 NOYELLES-LES-SECLIN (FR); CARDINAUD, ARNAUD, 59139 NOYELLES-LES-SECLIN (FR)
(74) Mandataire: Bureau Duthoit Legros Associés

(56) Documents cités:
- DE-B- 1 114 168
- FR-A1- 2 939 051
- US-A1- 2011 313 207

## Description

L'invention concerne un procédé et une installation pour le traitement de liquides.

Ce procédé et cette installation trouveront une application particulière pour le traitement d'effluents contenant des solvants dissous, tels que par exemple l'ammoniaque, ou encore le traitement de liquides pétroliers, et des impuretés non-volatiles, telles que des sels ou encore des matières encrassantes.

Dans le domaine du traitement des effluents, il est connu d'extraire l'ammoniaque de l'eau en effectuant une distillation.

Le produit souillé est introduit continûment en partie supérieure d'une colonne de distillation (encore appelée colonne de « *stripping* ») et se répand sous l'effet de la gravité en s'écoulant sur un support, tel que par exemple un garnissage type paille métallique, ou encore une série de plateaux superposés.

Un flux de transport, tel que de la vapeur d'eau propre, est introduit à la partie inférieure de la colonne. En remontant, cette vapeur de transport échange et se charge en solvant volatile contenu dans le produit, qui se purifie donc.

Le produit traité est purifié et récupéré en partie basse de la colonne, tandis que la vapeur de transport sortante est condensée en un condensat fortement chargé en solvant.

Le défaut de telles installations à colonne de distillation est leur consommation excessive en énergie.

Afin de pallier cet inconvénient et proposer une installation de traitement dont le rendement énergétique est amélioré, il a été proposé dans la demande de brevet FR 2 939 051, déposée par la Demanderesse, une installation de traitement de liquides, tels que notamment les effluents, contenant des solvants dissous ou encore les produits pétroliers, comprenant au moins une colonne de distillation, un dispositif de génération d'une vapeur de transport destinée à alimenter ladite colonne de distillation, et des moyens pour condenser en un condensat la vapeur de transport sortant de ladite colonne de distillation, et dans laquelle ladite colonne de distillation forme au moins une chambre de traitement verticale, ladite installation présentant :
- des moyens d'introduction de la vapeur de transport, en partie basse de la colonne de distillation,
- des moyens d'introduction d'un liquide à traiter, en hauteur, dans ladite colonne de distillation,
- des moyens support de ruissellement à l'intérieur de ladite au moins une chambre de traitement verticale pour ralentir la chute de liquide et augmenter la surface d'échange gaz/liquide dans ladite chambre,
- des moyens pour récupérer le liquide traité ayant chuté en partie basse de la colonne de distillation,

Un telle installation étant remarquable en ce que le dispositif de génération de ladite vapeur de transport présente des moyens pour récupérer la chaleur de la vapeur de transport sortant de ladite colonne de distillation afin de vaporiser un liquide à vaporiser, le dispositif comprenant :
- un échangeur-évaporateur comprenant une entrée pour le liquide à vaporiser, une entrée pour un flux chaud constitué de ladite vapeur de transport sortant de la colonne de distillation et une sortie pour la vapeur engendrée destinée à alimenter ladite colonne de distillation,
- des moyens compresseurs afin de compresser soit la vapeur engendrée par l'échangeur-évaporateur, en aval dudit échangeur-évaporateur, soit la vapeur de transport sortant de ladite colonne de distillation, en amont dudit échangeur-évaporateur.

Malgré certains avantages, une telle installation et les procédés de traitement de liquides mis en œuvre grâce à une telle installation, présentent encore l'inconvénient, que dans le cas où le liquide à traiter comporte des impuretés non-volatiles, telles que des sels, par exemple du Chlorure de Sodium (NaCl) ou encore du Chlorure de Potassium (KCl), notamment avec une concentration importante, typiquement supérieure à 30%, ou encore des matières encrassantes, par exemple lorsqu'il s'agit de lixiviats ou de phases liquides des digestats de méthanisation, ces sels ou ces matières encrassantes vont se retrouver à la base de la colonne de distillation, car ils ne seront pas emporté par la vapeur comme les solvants dissous. Ainsi, le liquide purifié chargé en impuretés non-volatiles sera utilisé comme liquide à vaporiser dans l'échangeur-évaporateur, ce qui provoque de nombreux désagréments, dont deux désagréments majeurs :
- un retard ébullioscopique intervient dans l'échangeur-évaporateur, car la concentration en sels du liquide augmente le point d'évaporation dans l'échangeur-évaporateur,
- une corrosion et un encrassement plus important des parois de l'échangeur-évaporateur et/ou de la colonne de distillation se produisent en raison de la concentration en sel et/ou de la présence de matières encrassantes.

Ces désagréments majeurs nuisent au bon fonctionnement d'une telle installation, et dégradent son rendement énergétique, ainsi que son coût d'exploitation, notamment en ce qu'il peut être nécessaire d'augmenter la puissance de compression afin de compenser le retard ébullioscopique qui intervient dans l'échangeur, ou encore parce qu'il faut augmenter la fréquence des opérations de maintenance.

Ainsi, la présente invention se propose de pallier aux inconvénients précédemment cités en proposant une installation de traitement empêchant tout retard ébullioscopique dans l'échangeur et réduisant l'encrassement et la corrosion des parois des différents éléments de l'installation, et en particulier de l'échangeur, même lorsque le liquide brut à traiter comprend des sels (NaCl, ou KCl) en concentration importante.

La présente invention concerne un procédé de traitement d'un liquide brut, tels que notamment des effluents, contenant des solvants dissous et des impuretés non-volatiles, ledit procédé comprenant la fourniture d'une installation de traitement de liquides comprenant :
- une première colonne de distillation, dite colonne de distillation des liquides bruts formant au moins une chambre de traitement verticale, et des moyens support de ruissellement à l'intérieur de ladite au moins une chambre de traitement verticale pour ralentir la chute de liquide et augmenter la surface d'échange gaz/liquide dans ladite chambre,
- une deuxième colonne de distillation, dite colonne de distillation des condensats formant au moins une chambre de traitement verticale, et des moyens support de ruissellement à l'intérieur de ladite au moins une chambre de traitement verticale pour ralentir la chute de liquide et augmenter la surface d'échange gaz/liquide dans ladite chambre,
- un dispositif de génération de vapeur de transport, comprenant un échangeur-évaporateur muni d'un primaire et d'un secondaire, générant une vapeur de transport

Le procédé de traitement continu comprenant les étapes simultanées :
(a) Alimentation de la première colonne de distillation de l'installation avec le liquide brut contenant des solvants dissous et des impuretés non-volatiles, ledit liquide brut n'alimentant pas la deuxième colonne de distillation,
(b) Extraction des solvants du liquide brut dans la première colonne de distillation par l'intermédiaire de la vapeur de transport, le liquide purifié des solvants et comprenant des impuretés non-volatiles chutant en partie basse de la première colonne de distillation à l'issue de cette étape étant évacuées définitivement de l'installation,
(c) Alimentation du primaire de l'échangeur-évaporateur avec de la vapeur de transport chargée de solvants issue de la première colonne de distillation, afin de fournir la chaleur nécessaire à la vaporisation d'un liquide dans le secondaire de l'échangeur-évaporateur prévu pour former la vapeur de transport,
(d) Vaporisation dans le secondaire de l'échangeur-évaporateur du liquide destiné à former la vapeur de transport, la vapeur de transport chargée de solvants se condensant partiellement en un condensat chargé de solvants dans le primaire de l'échangeur-évaporateur, la vapeur chargée de solvants non condensée demeurant dans le primaire de l'échangeur-évaporateur (30) étant purgée en vue d'être condensée,
(e) Alimentation de la deuxième colonne de distillation avec le condensat chargé de solvants issu de l'étape (d) de vaporisation dans l'échangeur-évaporateur,
(f) Extraction des solvants du condensat chargé de solvants dans la deuxième colonne de distillation, le condensat purifié se trouvant dans des moyens de récupération en partie basse de la colonne de distillation à l'issue de cette étape étant transmis à l'échangeur-évaporateur afin de constituer, au moins partiellement, le liquide à vaporiser pour former la vapeur de transport,
(g) Alimentation du primaire l'échangeur-évaporateur avec la vapeur chargée de solvants en sortie de la deuxième colonne de distillation, afin de fournir la chaleur nécessaire à la vaporisation du liquide prévu pour former la vapeur de transport,
(h) Compression de la vapeur de transport en amont ou en aval de l'échangeur-évaporateur, par l'intermédiaire de moyens compresseurs afin d'augmenter l'enthalpie de la vapeur de transport employée au cours des étapes (c) et (g),
(i) Alimentation de la première colonne de distillation et de la deuxième colonne de distillation avec la vapeur de transport produite à l'étape (d).

Selon des caractéristiques optionnelles, ledit procédé peut présenter en tout ou partie les caractéristiques suivantes :
- la vapeur de transport et/ou le liquide destiné à être vaporisé sont purgés de l'échangeur-évaporateur par l'intermédiaire d'un système de purge au cours d'une étape (j),
- les impuretés non volatiles du liquide brut avec lequel on alimente l'installation au cours de l'étape (b) comprennent un sel, tel que du chlorure de sodium ou du chlorure de potassium,
- les impuretés non volatiles du liquide brut avec lequel on alimente l'installation au cours de l'étape (b) comprennent une matière encrassante.

L'invention concerne également une installation de traitement de liquides, tels que notamment des effluents, contenant des solvants dissous et des impuretés non-volatiles, comprenant :
- un dispositif de génération d'une vapeur de transport,
- des moyens d'acheminement des liquides dans l'installation, prévus pour acheminer des liquides bruts, non traités dans l'installation, contenant des impuretés non-volatiles,
- une première colonne de distillation, dite colonne de distillation des liquides bruts, formant au moins une chambre de traitement verticale,
- des moyens d'introduction d'un liquide à traiter, en hauteur, dans ladite première colonne de distillation,
- des moyens support de ruissellement à l'intérieur de ladite au moins une chambre de traitement verticale pour ralentir la chute de liquide et augmenter la surface d'échange gaz/liquide dans ladite chambre,
- des moyens d'introduction de la vapeur de transport, en partie basse de la première colonne de distillation,
- des moyens pour récupérer le liquide traité ayant chuté en partie basse de la première colonne de distillation,
- des moyens d'évacuation du liquide traité ayant chuté en partie basse de la première colonne de distillation,
ladite installation comprenant en outre :
- une deuxième colonne de distillation, dite colonne de distillation des condensats, formant au moins une chambre de traitement verticale,
- des moyens d'introduction d'un liquide à traiter, en hauteur, dans ladite deuxième colonne de distillation,
- des moyens support de ruissellement à l'intérieur de ladite au moins une chambre de traitement verticale pour ralentir la chute de liquide et augmenter la surface d'échange gaz/liquide dans ladite chambre,
- des moyens d'introduction de la vapeur de transport, en partie basse de la deuxième colonne de distillation,
- des moyens pour récupérer le liquide traité ayant chuté en partie basse de la deuxième colonne de distillation,
installation dans laquelle ledit dispositif de génération de la vapeur de transport présente des moyens pour récupérer la chaleur de la vapeur de transport sortant de ladite première colonne de distillation et de ladite deuxième colonne de distillation afin de vaporiser un liquide à vaporiser, ledit dispositif comprenant :
- un échangeur-évaporateur muni d'un primaire et d'un secondaire, comprenant une entrée pour le liquide à vaporiser, une entrée pour un flux chaud constitué de ladite vapeur de transport chargée des solvants sortant de la première colonne de distillation et de la deuxième colonne de distillation, une sortie pour la vapeur de transport engendrée dans le secondaire de l'échangeur-évaporateur alimentant ladite première colonne de distillation et ladite deuxième colonne de distillation, et une sortie pour le condensat chargé en solvants issu de la condensation de la vapeur de transport sortant de la première colonne de distillation et de la deuxième colonne de distillation dans le primaire de l'échangeur-évaporateur,
- des moyens compresseurs afin de compresser soit la vapeur de transport engendrée dans le secondaire de l'échangeur-évaporateur, en aval dudit échangeur-évaporateur, soit la vapeur de transport sortant de ladite première colonne de distillation et de ladite deuxième colonne de distillation, en amont dudit échangeur-évaporateur,
installation dans laquelle :
- seule ladite première colonne de distillation reçoit les liquides bruts, par l'intermédiaire des moyens d'acheminement des liquides bruts dans l'installation, les liquides bruts étant alimentés en partie haute de la première colonne de distillation par l'intermédiaire des moyens d'introduction d'un liquide à traiter, et les liquides purifiés de solvants récupérés en partie basse de la première colonne de distillation, contenant des impuretés non-volatiles étant évacués par l'intermédiaire des moyens d'évacuation, sans être transmis à la deuxième colonne de distillation,
- ladite deuxième colonne de distillation reçoit le condensat formé dans le primaire de l'échangeur-évaporateur, contenant les solvants, le condensat étant alimenté en partie haute de la deuxième colonne de distillation par l'intermédiaire des moyens d'introduction d'un liquide à traiter,
- l'échangeur-évaporateur présente, en outre, une sortie d'exhaure pour la vapeur de transport ayant apporté sa chaleur audit échangeur-évaporateur, et fortement chargée de solvants, et dans laquelle un dispositif de condensation, distinct dudit échangeur-évaporateur, permet de condenser la vapeur issue de ladite sortie d'exhaure,
- le secondaire de l'échangeur-évaporateur est alimenté en liquide à vaporiser, au niveau de l'entrée, pour le liquide à vaporiser par le liquide récupéré en partie basse de la deuxième colonne de distillation par l'intermédiaire des moyens de récupération de liquide à vaporiser.

Selon des caractéristiques optionnelles, ladite installation peut présenter tout ou partie les caractéristiques suivantes :
- l'échangeur-évaporateur prend la forme de tubes d'évaporation sensiblement verticaux disposés dans une chambre de chauffage, et présente des moyens assurant l'introduction de la vapeur de transport récupérée dans la chambre et chauffant la paroi externe desdits tubes d'évaporation, des moyens pour introduire le liquide à vaporiser dans les tubes d'évaporation à leur partie supérieure, ainsi que des moyens pour récupérer le liquide ayant traversé les tubes d'évaporation, le primaire de l'échangeur étant défini par le volume de chambre de chauffage à l'extérieur des tubes, le secondaire défini à l'intérieur des tubes.

D'autres buts et avantages apparaîtront dans la description qui va suivre qui n'est donnée qu'à titre indicatif et qui n'a pas pour but de la limiter.

L'invention sera mieux comprise à la lecture de la description suivante accompagnée des dessins en annexe, parmi lesquels :
- La figure 1 est une vue schématique d'une installation de traitement de liquide conforme à l'invention selon un premier mode de réalisation et apte à mettre en œuvre le procédé selon l'invention,
- La figure 2 est une vue schématique d'une installation selon un deuxième mode de réalisation et apte à mettre en œuvre le procédé selon l'invention.

L'invention concerne un procédé de traitement d'un liquide brut, tels que notamment des effluents, contenant des solvants dissouts et des impuretés non-volatiles, ledit procédé comprenant la fourniture d'une installation de traitement de liquides 1 comprenant :
- une première colonne de distillation 10, dite colonne de distillation des liquides bruts,
- une deuxième colonne de distillation 20, dite colonne de distillation des condensats,
- un dispositif 30 de génération de vapeur de transport VT, comprenant un échangeur-évaporateur 30 muni d'un primaire 30P et d'un secondaire 30S, générant une vapeur de transport VT.

Selon l'invention, le procédé de traitement continu comprend les étapes simultanées :
(a) Alimentation de de la première colonne de distillation 10 de l'installation 1 avec un liquide brut LB contenant des solvants dissous et des impuretés non-volatiles, le liquide brut n'alimentant pas la deuxième colonne de distillation 20,
(b) Extraction des solvants du liquide brut LB dans la première colonne de distillation 10 par l'intermédiaire de la vapeur de transport VT, le liquide purifié des solvants et contenant les impuretés non-volatiles chutant en partie basse de la première colonne de distillation 10 à l'issue de cette étape étant évacuées définitivement de l'installation 1,
(c) Alimentation du primaire 30P de l'échangeur-évaporateur 30 avec de la vapeur de transport chargée de solvants VTS issue de la première colonne de distillation 10, afin de fournir la chaleur nécessaire à la vaporisation d'un liquide LV prévu pour former la vapeur de transport LV,
(d) Vaporisation dans le secondaire 30S de l'échangeur-évaporateur 30 du liquide LV destiné à former la vapeur de transport VT, la vapeur chargée des solvants VTS se condensant partiellement en un condensat CS chargé de solvants se formant dans le primaire 30P de l'échangeur-évaporateur 30, la vapeur VTCS chargée de solvants non condensée demeurant dans le primaire 30P de l'échangeur-évaporateur 30 étant purgée en vue d'être condensée,
(e) Alimentation de la deuxième colonne de distillation 20 avec le condensat CS chargé de solvants issu de l'étape (d) de vaporisation dans l'échangeur-évaporateur 30,
(f) Extraction des solvants du condensat chargé de solvants CS dans la deuxième colonne de distillation 20, le condensat purifié CP se trouvant dans des moyens de récupération 24 en partie basse de la colonne de distillation 20 à l'issue de cette étape étant transmis à l'échangeur-évaporateur 30 afin de constituer, au moins partiellement, le liquide à vaporiser LV pour former la vapeur de transport VT,
(g) Alimentation du primaire 30P de l'échangeur-évaporateur 30 avec la vapeur chargée de solvants VTS en sortie de la deuxième colonne de distillation 20, afin de fournir la chaleur nécessaire à la vaporisation du liquide LV prévu pour former la vapeur de transport VT,
(h) Compression de la vapeur de transport VT en amont (vapeur chargée des solvants) ou en aval (vapeur propre) de l'échangeur-évaporateur 30, par l'intermédiaire de moyens compresseurs 40 afin d'augmenter l'enthalpie de la vapeur de transport VT employée au cours des étapes (c) et (g),
(i) Alimentation de la première colonne de distillation 10 et de la deuxième colonne de distillation 20 avec la vapeur de transport VT produite à l'étape (d).

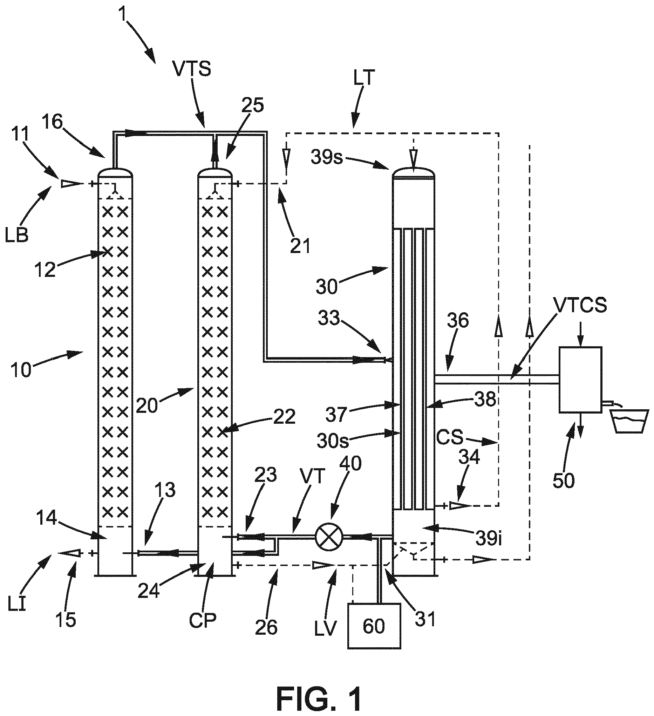

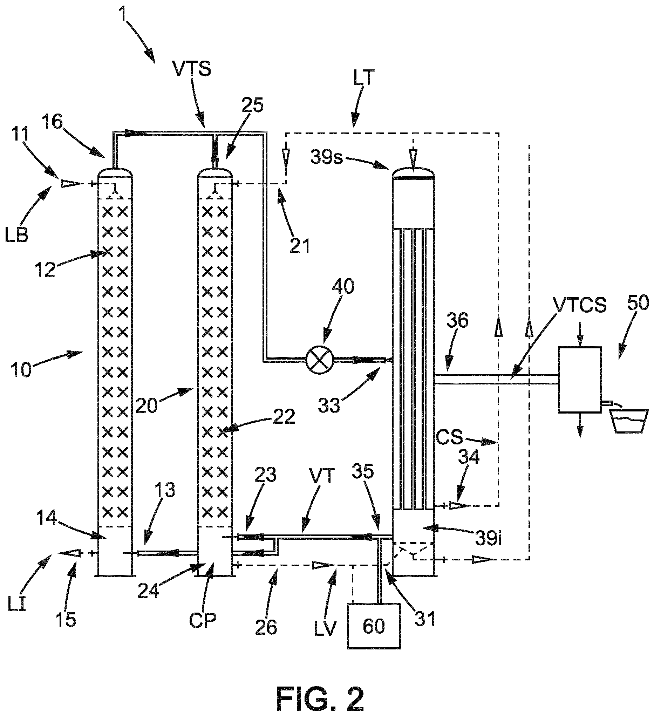

Un tel procédé avec ces étapes exécutées en simultané, permet à ladite installation 1, représentée aux exemples de réalisation des figures 1 et 2, de traiter un liquide brut contenant des solvants et des impuretés non-volatiles de façon continue.

Avantageusement, et comme les impuretés non volatiles sont évacuées définitivement de l'installation 1 au cours de l'étape (b), qui a lieu dans la première colonne de distillation 10, celles-ci ne se retrouveront à aucun moment dans les autres éléments de ladite installation 1, et en particulier dans ladeuxième colonne de distillation 20, et surtout l'échangeur-vaporisateur 30.

Le fonctionnement de ces éléments 20, 30 n'est donc pas perturbé par la présence de ces impuretés non-volatiles et ladite installation ne souffrira pas des problèmes identifiés avec les installations de l'état de la technique, à savoir :
- un retard ébullioscopique intervenant dans l'échangeur-évaporateur 30, car la concentration en impuretés non-volatiles, notamment en sels, du liquide à traiter augmente le point d'évaporation dans l'échangeur-évaporateur 30 : l'invention permet de s'assurer que le liquide purifié des solvants et contenant les sels récupérés à la base de la première colonne de distillation 20 n'arrive pas à l'échangeur-évaporateur 30,
- une corrosion et un encrassement plus important des parois de l'échangeur-évaporateur 30 et/ou de la deuxième colonne de distillation 20 se produisent en raison de la concentration en sel et/ou de la présence de matières encrassantes.

Ainsi, le rendement énergétique du procédé et de l'installation sera nettement amélioré par rapport à l'état de la technique, et le coût de fonctionnement de l'installation en sera réduit.

En effet, il ne sera pas nécessaire d'augmenter la quantité de vapeur à fournir à l'échangeur-évaporateur pour contrer le retard ébullioscopique engendré par la présence d'impureté non-volatiles afin d'obtenir une évaporation satisfaisante du liquide LV vaporisé dans l'échangeur-évaporateur 30.

De plus, les parois du secondaire 30S, par de l'échangeur-évaporateur 30, ainsi que celles de la deuxième colonne de distillation 20 ou encore des moyens compresseur 40, ne seront pas encrassées par les impuretés non-volatiles, ce qui diminue les besoins en maintenance de ces éléments et donc le coût de fonctionnement de ladite installation 1.

L'étape (h) de compression de la vapeur de transport VT, VTS permet avantageusement de limiter les besoins en vapeur de l'installation 1 pour mettre en œuvre le procédé selon l'invention. En effet, grâce à cette étape (h) de compression, l'enthalpie de la vapeur est augmentée, et donc sa température et sa pression, ce qui permet de pouvoir la réutiliser au cours des étapes (b) et (f) d'extraction des solvants, intervenant respectivement dans la première colonne de distillation 10 et dans la deuxième colonne de distillation 20, et donc de limiter d'injecter de la nouvelle vapeur dans l'installation 1 pour mettre en œuvre le procédé.

Selon un premier mode de réalisation, représenté par exemple à la figure 1, l'étape (h) de compression de la vapeur de transport VT peut être réalisée par des moyens compresseurs 40, comprenant par exemple un compresseur mécanique, disposés en aval de l'échangeur-évaporateur 30 et en amont de la première colonne de distillation 10 et de la deuxième colonne de distillation 20. Dans un tel mode de réalisation, les moyens compresseurs 40 vont effectuer une compression sur de la vapeur de transport VT, purifiée de solvants.

Selon un deuxième mode de réalisation, représenté par exemple à la figure 2, l'étape (h) de compression de la vapeur de transport VTS peut être réalisée par des moyens compresseurs 40, comprenant par exemple un compresseur mécanique, disposés en amont de l'échangeur-évaporateur 30, et en aval de la première colonne de distillation 10 et de la deuxième colonne de distillation 20. Dans un tel mode de réalisation, les moyens compresseurs 40 vont effectuer une compression sur de la vapeur de transport VTS, chargée de solvants.

Selon un mode de réalisation, la vapeur de transport VT et/ou le liquide LV destiné à être vaporisé sont purgés de l'échangeur-évaporateur 30 par l'intermédiaire d'un système de purge 60 au cours d'une étape (j).

Comme visible sur les exemples de réalisation des figures 1 et 2, la vapeur de transport VT peut être purgée au niveau d'une sortie 35 de vapeur de transport VT de l'échangeur-évaporateur 30, notamment une sortie 35 de vapeur de transport VT purifiée, i.e. ne contenant pas de solvants, par exemple en amont de la deuxième colonne de distillation 20 et de la première colonne de distillation 10.

La vapeur de transport VT ainsi purgée peut éventuellement servir à alimenter un réseau d'alimentation en vapeur distinct de ladite installation 1.

Comme visible sur les exemples de réalisation des figures 1 et 2, le liquide LV à vaporiser peut être purgé au niveau d'une sortie de liquide à vaporiser LV de l'échangeur-évaporateur 30, notamment une sortie de liquide à vaporiser LV purifié, i.e. ne contenant pas de solvants, par exemple en aval de la deuxième colonne de distillation 20 et en amont de l'échangeur-évaporateur 30.

Le liquide à vaporiser LV ainsi purgé peut éventuellement servir à alimenter un réseau d'alimentation en liquide distinct de ladite installation 1.

Une telle étape (j) de purge de la vapeur de transport VT et/ou le liquide LV destiné à être vaporisé permet avantageusement d'ajuster l'alimentation en vapeur de transport VT et/ou en liquide à vaporiser LV de l'installation 1 mettant en œuvre le procédé selon l'invention, afin par exemple d'éviter les surchauffes de la première 10 et/ou de la deuxième 20 colonne de distillation, à cause d'une trop grande quantité de vapeur de transport VT reçue.

Selon un mode de réalisation, les impuretés non volatiles du liquide brut LB avec lequel on alimente l'installation 1 au cours de l'étape (b) comprennent un sel, tel que du chlorure de sodium ou du chlorure de potassium.

Comme expliqué précédemment, les sels contenus dans les liquides bruts LB à traiter peuvent dégrader le fonctionnement d'une installation mettant en œuvre un procédé de traitement de liquides. En effet, de tels sels, auront tendance à créer un retard ébulioscopique au niveau du dispositif générateur de vapeur, le liquide LV destiné à être vaporisé, bien que ne contenant plus de solvants, contient encore les sels, qui ne sont pas des particules volatiles, et qui ne peuvent être extraits d'un liquide par l'intermédiaire d'une colonne de distillation.

Par ailleurs, de tels sels peuvent générer un encrassement ou une corrosion des différents éléments de l'installation mettant en œuvre un procédé de traitement de liquide.

Grâce au procédé selon l'invention, les sels sont évacués définitivement de l'installation 1 à l'issue de l'étape (b), qui intervient dans la première colonne de distillation 10, qui devient le seul élément de l'installation à entrer en contact avec les sels au cours du procédé selon l'invention, ayant ainsi un « effet tampon » pour le reste de l'installation 1, dont les éléments, notamment la deuxième colonne de distillation 20, ou encore l'échangeur-évaporateur 30, n'entreront pas en contact avec lesdits sels.

Selon un mode de réalisation, les impuretés non volatiles du liquide brut LB avec lequel on alimente l'installation 1 au cours de l'étape (b) comprennent une matière encrassante.

Comme expliqué précédemment, une telle matière encrassante peut consister en un lixiviat, ou encore une phase liquide d'un digestat de méthanisation.

De telles matières encrassantes ont des effets néfastes pour une installation permettant de mettre en œuvre un procédé de traitement d'un liquide, similaires à ceux des sels décrits précédemment.

Ainsi, grâce au procédé selon l'invention, la matières encrassante n'entrera en contact qu'avec la première colonne de distillation 10 de l'installation 1, et sera évacuée définitivement de l'installation 1 à l'issue de l'étape (b), lui empêchant notamment de venir encrasser les autres éléments 20, 30 de l'installation 1.

L'invention concerne également une installation de traitement de liquides 1, tels que notamment des effluents, contenant des solvants dissous et des impuretés non-volatiles, comprenant, et convenant pour la mise en œuvre du procédé ci-dessus décrit :
- un dispositif de génération d'une vapeur de transport 30,
- des moyens d'acheminement 11 des liquides dans l'installation 1, prévus pour acheminer des liquides bruts LB, non traités dans l'installation 1, contenant des impuretés non-volatiles,
- une première colonne de distillation 10, dite colonne de distillation des liquides bruts, formant au moins une chambre de traitement verticale,
- des moyens d'introduction 11 d'un liquide LB à traiter, en hauteur, dans ladite première colonne de distillation 10,
- des moyens support de ruissellement 12 à l'intérieur de ladite au moins une chambre de traitement verticale pour ralentir la chute de liquide et augmenter la surface d'échange gaz/liquide dans ladite chambre,
- des moyens 13 d'introduction de la vapeur de transport VT, en partie basse de la première colonne de distillation 10,
- des moyens 14 pour récupérer le liquide traité ayant chuté en partie basse de la première colonne de distillation 10,
- des moyens 15 d'évacuation du liquide traité ayant chuté en partie basse de la première colonne de distillation 10,
ladite installation comprenant en outre :
- une deuxième colonne de distillation 20, dite colonne de distillation des condensats, formant au moins une chambre de traitement verticale,
- des moyens 21 d'introduction d'un liquide à traiter, en hauteur, dans ladite deuxième colonne de distillation 20,
- des moyens support de ruissellement 22 à l'intérieur de ladite au moins une chambre de traitement verticale pour ralentir la chute de liquide et augmenter la surface d'échange gaz/liquide dans ladite chambre,
- des moyens 23 d'introduction de la vapeur de transport VT, en partie basse de la deuxième colonne de distillation,
- des moyens 24 pour récupérer le liquide traité ayant chuté en partie basse de la deuxième colonne de distillation 20.

Selon l'invention, ledit dispositif 30 de génération de la vapeur de transport VT présente des moyens 33 pour récupérer la chaleur de la vapeur de transport VTS sortant de ladite première colonne de distillation 10 et de ladite deuxième colonne de distillation 20 afin de vaporiser un liquide à vaporiser, ledit dispositif 30 comprenant :
- un échangeur-évaporateur 30 muni d'un primaire 30P et d'un secondaire 30S, comprenant une entrée 31 pour le liquide LV à vaporiser, une entrée 33 pour un flux chaud constitué de ladite vapeur de transport VTS sortant de la première colonne de distillation 10 et de la deuxième colonne de distillation 20, une sortie pour la vapeur de transport VT engendrée dans le secondaire 30S de l'échangeur-évaporateur 30 alimentant ladite première colonne de distillation 10 et ladite deuxième colonne de distillation 20, et une sortie 34 pour le condensat chargé en solvants CS issus de la condensation de la vapeur de transport VTS sortant de la première colonne de distillation 10 et de la deuxième colonne de distillation 20 dans le primaire 30P de l'échangeur-évaporateur 30,
- des moyens compresseurs 40 afin de compresser soit la vapeur de transport VT engendrée dans le secondaire 30S de l'échangeur-évaporateur 30, en aval dudit échangeur-évaporateur 30, soit la vapeur de transport VTS sortant de ladite première colonne de distillation 10 et de ladite deuxième colonne de distillation 20, en amont dudit échangeur-évaporateur 30.

### Selon l'invention :

- seule ladite première colonne de distillation 10 reçoit les liquides bruts LB, par l'intermédiaire des moyens 11 d'acheminement des liquides bruts LB dans l'installation 1, les liquides bruts LB étant alimentés en partie haute de la première colonne de distillation 10 par l'intermédiaire des moyens 11 d'introduction d'un liquide à traiter LB, et les liquides purifiés des solvants (LI) récupérés en partie basse de la première colonne de distillation 10, contenant des impuretés non-volatiles, étant évacués par l'intermédiaire des moyens d'évacuation 15, sans être transmis à la deuxième colonne de distillation 20,
- ladite deuxième colonne de distillation 20 reçoit le condensat CS formé dans le primaire 30P de l'échangeur-évaporateur 30, contenant les solvants, le condensat CS étant alimenté en partie haute de la deuxième colonne de distillation 20 par l'intermédiaire des moyens d'introduction 21 d'un liquide à traiter.

Une telle installation 1 peut avantageusement mettre en œuvre le procédé de traitement d'un liquide selon l'invention décrit précédemment.

Une telle installation 1 présente également l'avantage, que les impuretés non-volatiles, tels que des sels, par exemple du NaCl ou du KCl, ou des matières encrassantes, telles les lixiviats ou les digestats de méthanisation, en étant évacuées au niveau de la première colonne de distillation 10 de ladite installation 1, n'entrent pas en contact avec les autres éléments de l'installation, notamment la deuxième colonne de distillation, l'échangeur-évaporateur 30 ou encore les moyens compresseurs 40.

Ainsi, un retard ébullioscopique n'est pas engendré par ces impuretés volatiles dans l'échangeur évaporateur et les parois des éléments de l'installation, autres que celles de la première colonne de distillation 10 ne sont pas encrassées ou corrodées par ces impuretés. Lesdits moyens 12, 22 support de ruissellement peuvent être, de manière connue en soi, sous la forme de plateaux superposés ou encore sous la forme d'un garnissage de type paille métallique.

Nous décrivons par la suite les deux exemples de réalisation illustrés respectivement à la figure 1 et à la figure 2. Ces deux modes de réalisation se distinguent substantiellement par la position des moyens compresseurs 40 dans l'installation 1.

Chacune des colonnes de distillation 10, 20 forme une chambre de traitement.

Le liquide brut LB à traiter, comportant des solvants et des impuretés non-volatiles est acheminé continûment dans l'installation 1 par l'intermédiaire des moyens 11 d'acheminement des liquides dans l'installation 1.

Le liquide brut LB à traiter est ensuite introduit par les moyens d'introduction 11, en hauteur, à la partie supérieure de de la première colonne de distillation 10, tandis que la vapeur de transport VT est introduite par les moyens d'introduction 13 à la partie inférieure de la première colonne de distillation 10.

En remontant dans la première colonne de distillation 10, la vapeur de transport VT échange avec le liquide brut LB à traiter et se charge en solvants.

Les impuretés non-volatiles ne sont pas emportées par la vapeur de transport VT dans la première colonne de distillation 10 jusqu'à la partie supérieure de ladite première colonne de distillation 10, mais sont récupérées dans un condensat LI contenant les impuretés non-volatiles, en partie basse de ladite première colonne de distillation 10 par l'intermédiaire des moyens 14 de récupération avant d'être évacués par l'intermédiaire des moyens d'évacuation 15, tandis que la vapeur de transport VTS, chargée de solvants, est évacuée, en partie haute, de la première colonne de distillation 10, par l'intermédiaire de moyens 16 d'évacuation de la vapeur de transport VTS.

Ainsi, les impuretés non-volatiles seront définitivement évacuées de l'installation 1 et n'interagiront pas avec les autres éléments de l'installation 1.

La vapeur de transport VTS chargée de solvants, récupérée en partie haute de la première colonne de distillation est ensuite cheminée vers le dispositif de génération de vapeur 30. Comme visible sur les exemples de réalisation des figures 1 et 2, le dispositif de génération de vapeur 30 comprend un échangeur-évaporateur 30 comprenant une entrée 31 pour le liquide à vaporiser LV, une entrée 33 pour un flux chaud constitué par la vapeur de transport VTS sortant de la première colonne de distillation 10 et une sortie 39s pour la vapeur VT engendrée par ledit échangeur-évaporateur 30 et destinée à alimenter la première colonne de distillation.

Ledit échangeur-évaporateur est avantageusement muni d'un primaire 30P, prévu pour recevoir la vapeur de transport VTS chargée de solvants, qui apportera la chaleur au liquide à vaporiser LV, et un secondaire 30S prévu pour recevoir le liquide LV à vaporiser.

Des moyens 39i de récupération de la vapeur de transport VT permettent de récupérer la vapeur de transport VT, purifiée en sortie du secondaire 30S de l'échangeur-évaporateur 30, afin d'alimenter la première colonne de distillation 10 et la deuxième colonne de distillation 20. Une sortie 35 de vapeur de transport VT est prévue en partie basse de l'échangeur-évaporateur et communique avec les moyens 13, 23 d'introduction de la vapeur de transport VT en partie basse de la première colonne de distillation 10 et de la deuxième colonne de distillation 20.

Une sortie 34 est prévue pour extraire le condensat CS chargé de solvants récupéré en partie basse du primaire 30P de l'échangeur-évaporateur 30 et alimenter la deuxième colonne de distillation 20, en partie haute, par l'intermédiaire des moyens d'alimentation 21 de la deuxième colonne de distillation 20 en liquide LT à traiter, ledit liquide ne comportant pas d'impuretés non-volatiles.

La deuxième colonne de distillation 20 comporte des moyens d'introduction 23 de la vapeur de transport VT à la partie inférieure de la deuxième colonne de distillation 20.

En remontant dans la deuxième colonne de distillation 20, la vapeur de transport VT échange avec le liquide LT à traiter et se charge en solvants issus du condensat CS provenant de l'échangeur-évaporateur 30.

La deuxième colonne de distillation 20 comporte également des moyens 25 d'évacuation de la vapeur de transport VTS, chargée de solvants, en partie haute de la deuxième colonne de distillation 20 afin d'alimenter le primaire 30P de l'échangeur-évaporateur 30 par l'intermédiaire des moyens 33 pour récupérer la chaleur de la vapeur de transport VTS.

Il est à noter que selon ces exemples de réalisation, une partie de la condensation des vapeurs de transport VTS chargées de solvants, s'effectue dans ledit échangeur-évaporateur 30 qui présente des moyens pour récupérer le condensat produit dans ledit échangeur-évaporateur 30, et des moyens 34 pour l'acheminer jusqu'à la partie haute la deuxième colonne de distillation 20 afin de réaliser une nouvelle extraction des solvants.

Selon l'exemple de réalisation de la figure 1, les moyens compresseur 40, qui comprennent par exemple un compresseur mécanique, ou encore un thermocompresseur, sont prévus pour compresser la vapeur de transport VT, purifiée de solvants, générée par l'échangeur-évaporateur 30, qui est acheminée jusqu'aux moyens d'introduction 13, 23 de la première colonne de distillation 10 et de la deuxième colonne de distillation 20.

Selon un deuxième mode de réalisation, visible sur l'exemple de réalisation de la figure 2, les moyens compresseur 40, qui peuvent également comprendre un compresseur mécanique, ou encore un thermocompresseur, sont prévus pour compresser la vapeur de transport VTS, chargée de solvants, entre les moyens 16, 25 de récupération de la vapeur de transport VTS, chargée de solvants, en partie haute de la première colonne de distillation 10 et de la deuxième colonne de distillation et l'entrée pour la vapeur de transport VTS, chargée de solvants, de l'échangeur-évaporateur 30.

Selon ce deuxième mode de réalisation, les moyens compresseurs 40 ne compriment pas la vapeur de transport propre VT (i.e. purifiée de solvants), tel qu'illustré dans l'exemple de réalisation de la figure 1, mais la vapeur de transport VTS, chargée de solvants.

Avantageusement, comme visible aux exemples de réalisation des figures 1 et 2, un système de purge 60 peut-être prévu dans ladite installation 1 afin de purger le liquide à vaporiser LV, par exemple en amont de l'échangeur-évaporateur 30, et/ou la vapeur de transport VT, par exemple en aval de l'échangeur-évaporateur 30.

Selon un mode de réalisation, l'échangeur-évaporateur 30 présente, en outre, une sortie d'exhaure 36 pour la vapeur de transport VTCS ayant apportée sa chaleur audit échangeur-évaporateur, et fortement chargée de solvants, et dans laquelle un dispositif de condensation 50, distinct dudit échangeur-évaporateur 30, permet de condenser la vapeur VTCS issue de ladite sortie d'exhaure 36.

Ledit dispositif de condensation 50 peut par exemple être un aérotherme à condensation.

Dans ce dispositif 50, les condensats, fortement enrichis en solvant, sont en tout ou partie recyclés ou extraits de ladite installation 1, notamment en subissant une condensation fractionnée.

Selon l'exemple de réalisation des figures 1 et 2, le liquide à vaporiser LV dans ledit échangeur 30 est le liquide purifié LV récupéré en partie basse de la deuxième colonne de distillation 20 et qui est acheminé grâce à des moyens 26 jusqu'à l'entrée 31 dudit échangeur-évaporateur 30.

Selon un mode de réalisation, le secondaire 30S de l'échangeur-évaporateur 30 est alimenté en liquide à vaporiser LV, au niveau de l'entrée 31 pour le liquide à vaporiser, par le liquide LV récupéré en partie basse de la deuxième colonne de distillation 20 par l'intermédiaire des moyens 24 de récupération de liquide à vaporiser LV.

Comme visible sur les exemples de réalisation des figures 1 et 2, ladite deuxième colonne de distillation 20 comporte également des moyens 24 pour récupérer le liquide traité LV ayant chuté en partie basse de la deuxième colonne de distillation 20, ledit liquide LV étant purifié de solvants, et étant destiné à alimenter le secondaire 30S de l'échangeur-évaporateur 30, au niveau de l'entrée 31, par l'intermédiaire de moyens d'alimentation 26. Ce liquide LV est évidemment purifié de toute impureté non-volatile, car il a déjà traversé la première colonne de distillation 10.

Selon un mode de réalisation, le secondaire 30S de l'échangeur-évaporateur 30 prend la forme de tubes d'évaporation 37 sensiblement verticaux disposées dans une chambre de chauffage 38 constituant le primaire 30P de l'échangeur-évaporateur 30, et présente des moyens 33 assurant l'introduction de la vapeur de transport VTS récupérée dans la chambre 38 et chauffant la paroi externe desdits tubes d'évaporation 37, des moyens 39s pour introduire le liquide à vaporiser LV dans les tubes d'évaporation 37 à leur partie supérieure, ainsi que des moyens 39i pour récupérer le liquide LV ayant traversé les tubes d'évaporation, le primaire 30P de l'échangeur étant défini par le volume de chambre de chauffage 38 à l'extérieur des tubes 37, le secondaire 30S défini à l'intérieur des tubes 37.

Cet échangeur-évaporateur, visible sur les exemples de réalisation des figures 1 et 2, fonctionne de la manière suivante.

L'eau purifiée LV ayant chuté à la partie basse de la deuxième colonne de distillation 20 est récupérée et introduite par les moyens 39s dans les tubes d'évaporation 37 du secondaire 30S à leur partie supérieure. Cette eau, sous l'action combinée de la capillarité et de la gravité ruisselle à l'intérieur des tubes d'évaporation, et est vaporisée partiellement grâce à la chaleur transmise par la paroi des tubes 37.

La vapeur VT produite descend dans les tubes 37 et s'évacue par la sortie 35 tandis qu'une partie du liquide LV traverse les tubes 37 et s'évacue à leur partie inférieure pour être récupérée dans les moyens 39i ; c'est l'eau traitée LV, purifiée de solvants. La vapeur propre VT générée par l'échangeur-évaporateur 30 est acheminée jusqu'au dits moyens d'introduction 13, 23 de la première 10 et de la deuxième 20 colonne de distillation, en étant éventuellement compressée par les moyens compresseurs 40.

Le procédé et l'installation conformes à l'invention trouveront une application particulière notamment pour :
- le traitement de lisier d'animaux (qui contient, outre la matière sèche, de l'eau et de l'amoniaque),
- le traitement de lixiviats de décharge (qui contient, outre la matière sèche, de l'eau et de l'amoniaque),
- le traitement de liquide pétrolier (qui contient différents solvants à différents points d'ébullition) dont le raffinage des essences.

### NOMENCLATURE

1. Installation
LB. Liquide brut
LT. Liquide à traiter
LV. Liquide à vaporiser
LI. Liquide chargé d'impuretés non-volatiles
CS. Condensat chargé de solvants
VT. Vapeur de transport
VTS. Vapeur de transport chargée de solvants
VTCS. Vapeur de transports fortement chargée de solvants
10. Première colonne de distillation
20. Deuxième colonne de distillation
11, 21. Moyens d'introduction de liquide
12, 22. Moyens support de ruissellement
13, 23. Moyens d'introduction de la vapeur de transport
14, 24. Moyens pour récupérer traité
15. Moyens d'évacuation des impuretés non-volatiles
16, 25. Moyens d'évacuation de la vapeur chargée de solvants
26. Moyens d'alimentation en liquide
30. Dispositif de génération de vapeur/Echangeur-évaporateur
30P. Primaire
30S. Secondaire
31. Entrée pour le liquide à vaporiser
33. Entrée pour flux chaud
34. Sortie pour le condensat chargé en solvants
35. Sortie pour la vapeur de transport
36. Sortie d'exhaure
37. Tubes
38. Chambre de chauffage
39i. Moyens de récupération du liquide à vaporiser
39s. Moyens d'introduction du liquide à vaporiser
40. Moyens compresseur
50. Dispositif de condensation
60. Système de purge

## Revendications

1. Procédé de traitement d'un liquide brut, tels que notamment des effluents, contenant des solvants dissouts et des impuretés non-volatiles, ledit procédé comprenant la fourniture d'une installation de traitement de liquides (1) comprenant :
- une première colonne de distillation (10), dite colonne de distillation des liquides bruts formant au moins une chambre de traitement verticale, et des moyens support de ruissellement (12) à l'intérieur de ladite au moins une chambre de traitement verticale pour ralentir la chute de liquide et augmenter la surface d'échange gaz/liquide dans ladite chambre,
- une deuxième colonne de distillation (20), dite colonne de distillation des condensats formant au moins une chambre de traitement verticale, et des moyens support de ruissellement (22) à l'intérieur de ladite au moins une chambre de traitement verticale pour ralentir la chute de liquide et augmenter la surface d'échange gaz/liquide dans ladite chambre,
- un dispositif (30) de génération de vapeur de transport (VT), comprenant un échangeur-évaporateur (30) muni d'un primaire (30P) et d'un secondaire (30S), générant une vapeur de transport (VT)
le procédé de traitement continu comprenant les étapes simultanées :
(a) Alimentation de la première colonne de distillation (10) de l'installation (1) avec le liquide brut (LB) contenant des solvants dissous et des impuretés non-volatiles, ledit liquide brut (LB) n'alimentant pas la deuxième colonne de distillation (20),
(b) Extraction des solvants du liquide brut (LB) dans la première colonne de distillation (10) par l'intermédiaire de la vapeur de transport (VT), le liquide purifié des solvants et comprenant impuretés non-volatiles chutant en partie basse de la première colonne de distillation (10) à l'issue de cette étape étant évacués définitivement de l'installation (1), sans se retrouver dans la deuxième colonne de distillation (20) ni dans l'échangeur vaporisateur (30),
(c) Alimentation du primaire (30P) de l'échangeur-évaporateur (30) avec de la vapeur de transport chargée de solvants (VTS) issue de la première colonne de distillation (10), afin de fournir la chaleur nécessaire à la vaporisation d'un liquide (LV) dans le secondaire (30S) de l'échangeur-évaporateur (30) prévu pour former la vapeur de transport (LV),
(d) Vaporisation dans le secondaire (30S) de l'échangeur-évaporateur (30) du liquide (LV) destiné à former la vapeur de transport (VT), la vapeur de transport chargée de solvants se condensant partiellement en un condensat (CS) chargé de solvants dans le primaire (30P) de l'échangeur-évaporateur (30), la vapeur (VTCS) chargée de solvants non condensée demeurant dans le primaire (30P) de l'échangeur-évaporateur (30) étant purgée en vue d'être condensée,
(e) Alimentation de la deuxième colonne de distillation (20) avec le condensat (CS) chargé de solvants issu de l'étape (d) de vaporisation dans l'échangeur-évaporateur (30),
(f) Extraction des solvants du condensat chargé de solvants (CS) dans la deuxième colonne de distillation (20), le condensat purifié (CP) se trouvant dans des moyens de récupération (24) en partie basse de la colonne de distillation (20) à l'issue de cette étape étant transmis à l'échangeur-évaporateur (30) afin de constituer, au moins partiellement, le liquide à vaporiser (LV) pour former la vapeur de transport (VT),
(g) Alimentation du primaire (30P) l'échangeur-évaporateur (30) avec la vapeur chargée de solvants (VTS) en sortie de la deuxième colonne de distillation (20), afin de fournir la chaleur nécessaire à la vaporisation du liquide (LV) prévu pour former la vapeur de transport (VT),
(h) Compression de la vapeur de transport (VT) en amont ou en aval de l'échangeur-évaporateur (30), par l'intermédiaire de moyens compresseurs (40) afin d'augmenter l'enthalpie de la vapeur de transport (VT) employée au cours des étapes (c) et (g),
(i) Alimentation de la première colonne de distillation (10) et de la deuxième colonne de distillation (20) avec la vapeur de transport (VT) produite à l'étape (d).

2. Procédé selon la revendication 1, dans lequel, la vapeur de transport (VT) et/ou le liquide (LV) destiné à être vaporisé sont purgés de l'échangeur-évaporateur (30) par l'intermédiaire d'un système de purge (60) au cours d'une étape (j).

3. Procédé selon la revendication 1 dans lequel les impuretés non volatiles du liquide brut (LB) avec lequel on alimente l'installation (1) au cours de l'étape (b) comprennent un sel, tel que du chlorure de sodium ou du chlorure de potassium.

4. Procédé selon la revendication 1 ou 2, dans lequel les impuretés non volatiles du liquide brut (LB) avec lequel on alimente l'installation (1) au cours de l'étape (b) comprennent une matière encrassante.

5. Installation de traitement de liquides (1), tels que notamment des effluents, contenant des solvants dissous et des impuretés non-volatiles, comprenant :
- un dispositif de génération d'une vapeur de transport (30),
- des moyens d'acheminement (11) des liquides dans l'installation (1), prévus pour acheminer des liquides bruts (LB), non traités dans l'installation (1), contenant des impuretés non-volatiles,
- une première colonne de distillation (10), dite colonne de distillation des liquides bruts, formant au moins une chambre de traitement verticale,
- des moyens d'introduction (11) d'un liquide à traiter, en hauteur, dans ladite première colonne de distillation (10),
- des moyens support de ruissellement (12) à l'intérieur de ladite au moins une chambre de traitement verticale pour ralentir la chute de liquide et augmenter la surface d'échange gaz/liquide dans ladite chambre,
- des moyens (13) d'introduction de la vapeur de transport (VT), en partie basse de la première colonne de distillation (10),
- des moyens (14) pour récupérer le liquide traité ayant chuté en partie basse de la première colonne de distillation (10),
- des moyens (15) d'évacuation du liquide traité ayant chuté en partie basse de la première colonne de distillation (10),
ladite installation comprenant en outre :
- une deuxième colonne de distillation (20), dite colonne de distillation des condensats, formant au moins une chambre de traitement verticale,
- des moyens (21) d'introduction d'un liquide à traiter, en hauteur, dans ladite deuxième colonne de distillation (20),
- des moyens support de ruissellement (22) à l'intérieur de ladite au moins une chambre de traitement verticale pour ralentir la chute de liquide et augmenter la surface d'échange gaz/liquide dans ladite chambre,
- des moyens (23) d'introduction de la vapeur de transport (VT), en partie basse de la deuxième colonne de distillation,
- des moyens (24) pour récupérer le liquide traité ayant chuté en partie basse de la deuxième colonne de distillation (20),
installation dans laquelle ledit dispositif (30) de génération de la vapeur de transport (VT) présente des moyens (33) pour récupérer la chaleur de la vapeur de transport (VTS) sortant de ladite première colonne de distillation (10) et de ladite deuxième colonne de distillation (20) afin de vaporiser un liquide à vaporiser, ledit dispositif (30) comprenant :
- un échangeur-évaporateur (30) muni d'un primaire (30P) et d'un secondaire (30S), comprenant une entrée (31) pour le liquide à vaporiser, une entrée (33) pour un flux chaud constitué de ladite vapeur de transport (VTS) chargée des solvants sortant de la première colonne de distillation (10) et de la deuxième colonne de distillation (20), une sortie pour la vapeur de transport (VT) engendrée dans le secondaire (30S) de l'échangeur-évaporateur (30) alimentant ladite première colonne de distillation (10) et ladite deuxième colonne de distillation (20), et une sortie (34) pour le condensat chargé en solvants (CS) issus de de la condensation de la vapeur de transport (VTS) sortant de la première colonne de distillation (10) et de la deuxième colonne de distillation (20) dans le primaire (30P) de l'échangeur-évaporateur,
- des moyens compresseurs (40) afin de compresser soit la vapeur de transport (VT) engendrée dans le secondaire (30S) de l'échangeur-évaporateur (30), en aval dudit échangeur-évaporateur (30), soit la vapeur de transport (VTS) sortant de ladite première colonne de distillation (10) et de ladite deuxième colonne de distillation (20), en amont dudit échangeur-évaporateur (30),
installation dans laquelle :
- seule ladite première colonne de distillation (10) reçoit les liquides bruts (LB), par l'intermédiaire des moyens (11) d'acheminement des liquides bruts (LB) dans l'installation (1), les liquides bruts (LB) étant alimentés en partie haute de la première colonne de distillation (10) par l'intermédiaire des moyens (11) d'introduction d'un liquide à traiter (LB), et les liquides purifiés des solvants (LI) récupérés en partie basse de la première colonne de distillation (10), contenant des impuretés non-volatiles étant évacuées par l'intermédiaire des moyens d'évacuation (15), sans être transmis à la deuxième colonne de distillation (20), ni à l'échangeur vaporisateur (30),
- ladite deuxième colonne de distillation (20) reçoit le condensat (CS) formé dans le primaire (30P) de l'échangeur-évaporateur (30), contenant les solvants, le condensat (CS) étant alimenté en partie haute de la deuxième colonne de distillation (20) par l'intermédiaire des moyens d'introduction (21) d'un liquide à traiter,
- le secondaire (30S) de l'échangeur-évaporateur (30) est alimenté en liquide à vaporiser (LV) au niveau de l'entrée (31) pour le liquide à vaporiser par le liquide (LV) récupéré en partie basse de la deuxième colonne de distillation (20) par l'intermédiaire des moyens (24) de récupération de liquide à vaporiser (LV),
- l'échangeur-évaporateur (30) présente, en outre, une sortie d'exhaure (36) pour la vapeur de transport (VTCS) ayant apporté sa chaleur audit échangeur-évaporateur, et fortement chargée de solvants, et dans laquelle un dispositif de condensation (50), distinct dudit échangeur-évaporateur (30), permet de condenser la vapeur (VTCS) issue de ladite sortie d'exhaure (36).

6. Installation (1) selon la revendication 5, dans laquelle l'échangeur-évaporateur (30) prend la forme de tubes d'évaporation (37) sensiblement verticaux disposés dans une chambre de chauffage (38) et présente des moyens (33) assurant l'introduction de la vapeur de transport (VTS) récupérée dans la chambre (38) et chauffant la paroi externe desdits tubes d'évaporation (37), des moyens (39s) pour introduire le liquide à vaporiser (LV) dans les tubes d'évaporation (37) à leur partie supérieure, ainsi que des moyens (39i) pour récupérer le liquide (LV) ayant traversé les tubes d'évaporation, le primaire (30P) de l'échangeur étant défini par le volume de chambre de chauffage (38) à l'extérieur des tubes (37), le secondaire (30S) défini à l'intérieur des tubes (37).

## Patentansprüche

1. Verfahren zur Behandlung einer rohen Flüssigkeit, wie insbesondere von Abwasser, die gelöste Lösemittel und nichtflüchtige Verunreinigungen enthält, wobei das Verfahren die Bereitstellung einer Flüssigkeitsbehandlungsanlage (1) umfasst, die umfasst:
- eine erste Destillationskolonne (10), Destillationskolonne der rohen Flüssigkeiten genannt, die mindestens eine vertikale Behandlungskammer bildet, und Rieselwassertragmittel (12) in dem Inneren der mindestens einen vertikalen Behandlungskammer, um den Flüssigkeitsfall zu verlangsamen und die Gas-/Flüssigkeitstauschoberfläche in der Kammer zu erhöhen,
- eine zweite Destillationskolonne (20), Destillationskolonne der Kondensate genannt, die mindestens eine vertikale Behandlungskammer bildet, und Rieselwassertragmittel (22) in dem Inneren der mindestens einen vertikalen Behandlungskammer, um den Flüssigkeitsfall zu verlangsamen und die Gas-/Flüssigkeitstauschoberfläche in der Kammer zu erhöhen,
- eine Vorrichtung (30) zur Erzeugung von Förderdampf (VT), die einen Wärmetauscher-Verdampfer (30) umfasst, der mit einem Primärkreislauf (30P) und einem Sekundärkreislauf (30S) versehen ist, die einen Förderdampf (VT) erzeugen,
wobei das kontinuierliche Behandlungsverfahren die gleichzeitigen Schritte umfasst:
(a) Speisung der ersten Destillationskolonne (10) der Anlage (1) mit der rohen Flüssigkeit (LB), die gelöste Lösemittel und nichtflüchtige Verunreinigungen enthält, wobei die rohe Flüssigkeit (LB) die zweite Destillationskolonne (20) nicht speist,
(b) Extraktion der Lösemittel aus der rohen Flüssigkeit (LB) in der ersten Destillationskolonne (10) über den Förderdampf (VT), wobei die von den Lösemitteln gereinigte und nichtflüchtige Verunreinigungen umfassende Flüssigkeit, die nach diesem Schritt in den unteren Teil der ersten Destillationskolonne (10) fällt, endgültig aus der Anlage (1) ausgelassen wird, ohne in die zweite Destillationskolonne (20) oder in den Wärmetauscher-Verdampfer (30) zu gelangen,
(c) Speisung des Primärkreislaufs (30P) des Wärmetauscher-Verdampfers (30) mit dem mit Lösemitteln geladenen Förderdampf (VTS), der aus der ersten Destillationskolonne (10) stammt, um die Wärme zu liefern, die für die Verdampfung einer Flüssigkeit (LV) in dem Sekundärkreislauf (30S) des Wärmetauscher-Verdampfers (30) erforderlich ist, der vorgesehen ist, um den Förderdampf (LV) zu bilden,
(d) in dem Sekundärkreislauf (30S) des Wärmetauscher-Verdampfers (30) Verdampfung der Flüssigkeit (LV), die dazu bestimmt ist, den Förderdampf (VT) zu bilden, wobei der mit Lösemitteln geladene Förderdampf teilweise in ein mit Lösemitteln geladenes Kondensat (CS) in dem Primärkreislauf (30P) des Wärmetauscher-Verdampfers (30) kondensiert, wobei der mit nicht kondensierten Lösemitteln geladene Dampf (VTCS), der in dem Primärkreislauf (30P) des Wärmetauscher-Verdampfers (30) verbleibt, entleert wird, um kondensiert zu werden,
(e) Speisung der zweiten Destillationskolonne (20) mit dem mit Lösemitteln geladenen Kondensat (CS), das aus dem Verdampfungsschritt (d) hervorgeht, in den Wärmetauscher-Verdampfer (30),
(f) Extraktion der Lösemittel aus dem mit Lösemitteln geladenen Kondensat (CS) in der zweiten Destillationskolonne (20), wobei das gereinigte Kondensat (CP), das sich nach diesem Schritt in Mitteln (24) zum Wiedergewinnen im unteren Teil der Destillationskolonne (20) befindet, zu dem Wärmetauscher-Verdampfer (30) weitergegeben wird, um mindestens teilweise die zu verdampfende Flüssigkeit (LV) zu bilden, um den Förderdampf (VT) zu bilden,
(g) Speisung des Primärkreislaufs (30P) des Wärmetauscher-Verdampfers (30) mit dem mit Lösemitteln geladenen Förderdampf (VTS) am Ausgang der zweiten Destillationskolonne (20), um die Wärme zu liefern, die für die Verdampfung der Flüssigkeit (LV) erforderlich ist, die vorgesehen ist, um den Förderdampf (LV) zu bilden,
(h) Kompression des Förderdampfs (VT) stromaufwärts oder stromabwärts des Wärmetauscher-Verdampfers (30) über Kompressormittel (40), um die Enthalpie des Förderdampfs (VT), der bei den Schritten (c) und (g) eingesetzt wird, zu erhöhen,
(i) Speisung der ersten Destillationskolonne (10) und der zweiten Destillationskolonne (20) mit dem Förderdampf (VT), der im Laufe des Schritts (d) erzeugt wird.

2. Verfahren nach Anspruch 1, wobei der Förderdampf (VT) und/oder die Flüssigkeit (LV), der/die dazu bestimmt ist/sind, verdampft zu werden, aus dem Wärmetauscher-Verdampfer (30) über ein Entleerungssystem (60) im Laufe eines Schritts (j) entleert werden.

3. Verfahren nach Anspruch 1, wobei die nichtflüchtigen Verunreinigungen der rohen Flüssigkeit (LB), mit der die Anlage (1) im Laufe des Schritts (b) gespeist wird, ein Salz, wie Natriumchlorid oder Kaliumchlorid, umfassen.

4. Verfahren nach Anspruch 1 oder 2, wobei die nichtflüchtigen Verunreinigungen der rohen Flüssigkeit (LB), mit der die Anlage (1) im Laufe des Schritts (b) gespeist wird, einen verschmutzenden Stoff umfassen.

5. Anlage zur Behandlung von Flüssigkeiten (1), wie insbesondere Abwasser, die gelöste Lösemittel und nichtflüchtige Verunreinigungen enthalten, die umfasst:
- eine Vorrichtung zur Erzeugung eines Förderdampfs (30),
- Mittel (11) zum Befördern der Flüssigkeiten in der Anlage (1), die dazu bestimmt sind, rohe Flüssigkeiten (LB), die in der Anlage (1) nicht behandelt werden, die nichtflüchtige Verunreinigungen enthalten, zu befördern,
- eine erste Destillationskolonne (10), Destillationskolonne der rohen Flüssigkeiten genannt, die mindestens eine vertikale Behandlungskammer bildet,
- Mittel (11) zum Einführen einer zu behandelnden Flüssigkeit in Höhenlage in die erste Destillationskolonne (10),
- Rieselwassertragmittel (12) in dem Inneren der mindestens einen vertikalen Behandlungskammer, um den Flüssigkeitsfall zu verlangsamen und die Gas-/Flüssigkeitstauschoberfläche in der Kammer zu erhöhen,
- Mittel (13) zum Einführen des Förderdampfs (VT) im unteren Teil der ersten Destillationskolonne (10),
- Mittel (14) zum Wiedergewinnen der behandelten Flüssigkeit, die in den unteren Teil der ersten Destillationskolonne (10) gefallen ist,
- Mittel (15) zum Ableiten der behandelten Flüssigkeit, die in den unteren Teil der ersten Destillationskolonne (10) gefallen ist,
wobei die Anlage außerdem umfasst:
- eine zweite Destillationskolonne (20), Destillationskolonne der Kondensate genannt, die mindestens eine vertikale Behandlungskammer bildet,
- Mittel (21) zum Einführen einer zu behandelnden Flüssigkeit in Höhenlage in die zweite Destillationskolonne (20),
- Rieselwassertragmittel (22) in dem Inneren der mindestens einen vertikalen Behandlungskammer, um den Flüssigkeitsfall zu verlangsamen und die Gas-/Flüssigkeitstauschoberfläche in der Kammer zu erhöhen,
- Mittel (23) zum Einführen des Förderdampfs (VT) im unteren Teil der zweiten Destillationskolonne,
- Mittel (24) zum Wiedergewinnen der behandelten Flüssigkeit, die in den unteren Teil der zweiten Destillationskolonne (20) gefallen ist,
Anlage, in der die Vorrichtung (30) zum Erzeugen des Förderdampfs (VT) Mittel (33) zum Wiedergewinnen der Wärme des Förderdampfs (VTS), der aus der ersten Destillationskolonne (10) und der zweiten Destillationskolonne (20) austritt, aufweist, um eine zu verdampfende Flüssigkeit zu verdampfen, wobei die Vorrichtung (30) umfasst:
- einen Wärmetauscher-Verdampfer (30), der mit einem Primärkreislauf (30P) und einem Sekundärkreislauf (30S) versehen ist, der einen Eingang (31) für die zu verdampfende Flüssigkeit, einen Eingang (33) für einen warmen Fluss, der aus dem Förderdampf (VTS), der mit Lösemitteln geladen ist, besteht, der aus der ersten Destillationskolonne (10) und der zweiten Destillationskolonne (20) austritt, einen Ausgang für den Förderdampf (VT), der in dem Sekundärkreislauf (30S) des Wärmetauscher-Verdampfers (30) entsteht, der die erste Destillationskolonne (10) und die zweite Destillationskolonne (20) speist, und einen Ausgang (34) für das mit aus der Kondensation des Förderdampfs (VTS) stammenden Lösemitteln geladene Kondensat, das aus der ersten Destillationskolonne (10) und der zweiten Destillationskolonne (20) in den Primärkreislauf (30P) des Wärmetauscher-Verdampfers austritt,
- Kompressormittel (40), um entweder den Förderdampf (VT), der in dem Sekundärkreislauf (30S) des Wärmetauscher-Verdampfers (30) entsteht, stromabwärts des Wärmetauscher-Verdampfers (30) zu verdampfen, oder den Förderdampf (VTS), der aus der ersten Destillationskolonne (10) und der zweiten Destillationskolonne (20) austritt, stromaufwärts des Wärmetauscher-Verdampfers (30) zu komprimieren,
wobei in der Anlage:
- nur die erste Destillationskolonne (10) rohe Flüssigkeiten (LB) über Mittel (11) zum Befördern der rohen Flüssigkeiten (LB) in der Anlage (1) empfängt, wobei die rohen Flüssigkeiten (LB) im oberen Teil der ersten Destillationskolonne (10) über Mittel (11) zum Einführen einer zu behandelnden Flüssigkeit (LB) eingespeist werden, und die von den Lösemitteln gereinigten Flüssigkeiten (LI), die im unteren Teil der ersten Destillationskolonne (10) wiedergewonnen werden, die nichtflüchtige Verunreinigungen enthalten, über Ableitmittel (15) abgeleitet werden, ohne zu der zweiten Destillationskolonne (20) oder zu dem Wärmetauscher-Verdampfer (30) weitergegeben zu werden,
- die zweite Destillationskolonne (20) das Kondensat (CS), das in dem Primärkreislauf (30P) des Wärmetauscher-Verdampfers (30) gebildet wird, das die Lösemittel enthält, empfängt, wobei das Kondensat (CS) im oberen Teil der zweiten Destillationskolonne (20) über Mittel (21) zum Einführen einer zu behandelnden Flüssigkeit eingespeist wird,
- wobei der Sekundärkreislauf (30S) des Wärmetauscher-Verdampfers (30) mit zu verdampfender Flüssigkeit (LV) im Bereich des Eingangs (31) für die Flüssigkeit gespeist wird, die von der Flüssigkeit (LV) zu verdampfen ist, die im unteren Teil der zweiten Destillationskolonne (20) über Mittel (24) zum Wiedergewinnen der zu verdampfende Flüssigkeit (LV) wiedergewonnen wird,
- der Wärmetauscher-Verdampfer (30) außerdem einen Entwässerungsausgang (36) für den Förderdampf (VTCS) aufweist, der seine Wärme zu dem Wärmetauscher-Verdampfer beigetragen hat und stark mit Lösemitteln geladen ist, und in dem es eine Kondensationsvorrichtung (50), die von dem Wärmetauscher-Verdampfer (30) getrennt ist, erlaubt, den Dampf (VTCS), der aus dem Entwässerungsausgang (36) stammt, zu kondensieren.

6. Anlage (1) nach Anspruch 5, in der der Wärmetauscher-Verdampfer (30) die Form von im Wesentlichen senkrechten Verdampfungsrohren (37) annimmt, die in einer Heizkammer (38) angeordnet sind, und Mittel (33), die die Einführung des Förderdampfs (VTS), der in der Kammer (38) wiedergewonnen wird, sicherstellen, und die Außenwand der Verdampfungsrohre (37) heizen, Mittel (39s) zum Einführen der zu verdampfenden Flüssigkeit (LV) in die Verdampfungsrohre (37) in deren oberem Teil, sowie Mittel (39i) zum Wiedergewinnen der Flüssigkeit (LV), die die Verdampfungsrohre durchquert hat, aufweist, wobei der Primärkreislauf (30P) des Wärmetauschers von dem Volumen der Heizkammer (38) außerhalb der Rohre (37) definiert ist, wobei der Sekundärkreislauf (30S) in dem Inneren der Rohre (37) definiert ist.

## Claims

1. Method for processing a raw liquid, in particular such as effluents, containing dissolved solvents and non-volatile impurities, said method comprising the provision of a liquid processing installation (1) comprising:
- a first distillation column (10), referred to as the raw liquid distillation column, forming at least one vertical processing chamber, and run-off support means (12) inside said at least one vertical processing chamber for slowing the fall of liquid and increasing the gas/liquid exchange surface in said chamber,
- a second distillation column (20), referred to as the condensate distillation column, forming at least one vertical processing chamber, and run-off support means (22) inside said at least one vertical processing chamber for slowing the fall of liquid and increasing the gas/liquid exchange surface in said chamber,
- a device (30) for generating transport vapour (VT), comprising an exchanger-evaporator (30) provided with a primary (30P) and a secondary (30S), generating a transport vapour (VT), the continuous processing method comprising the simultaneous steps:
(a) feeding the first distillation column (10) of the installation (1) with the raw liquid (LB) containing dissolved solvents and non-volatile impurities, said raw liquid (LB) not being fed to the second distillation column (20),
(b) extracting solvents from the raw liquid (LB) in the first distillation column (10) by means of the transport vapour (VT), the liquid purified of solvents and comprising non-volatile impurities, falling in the lower part of the first distillation column (10) at the end of this step, being permanently removed from the installation (1), without ending up in the second distillation column (20) or in the exchanger-vaporiser (30),
(c) feeding the primary (30P) of the exchanger-evaporator (30) with the transport vapour loaded with solvents (VTS) coming from the first distillation column (10), in order to supply the heat necessary for the vaporisation of a liquid (LV) in the secondary (30S) of the exchanger-evaporator (30) provided in order to form the transport vapour (LV),
(d) vaporisation in the secondary (30S) of the exchanger-evaporator (30) of the liquid (LV) intended to form the transport vapour (VT), the transport vapour loaded with solvents partially condensing into a condensate (CS) loaded with solvents in the primary (30P) of the exchanger-evaporator (30), the vapour (VTCS) loaded with non-condensed solvents remaining in the primary (30P) of the exchanger-evaporator (30) being purged in order to be condensed,
(e) feeding the second distillation column (20) with the condensate (CS) loaded with solvents from vaporisation step (d) in the exchanger-evaporator (30),
(f) extracting the solvents from the condensate loaded with solvents (CS) in the second distillation column (20), the purified condensate (CP) being located in recovery means (24) in the lower part of the distillation column (20) at the end of this step being transmitted to the exchanger-evaporator (30) in order to make up, at least partially, the liquid to be vaporised (LV) in order to form the transport vapour (VT),
(g) feeding the primary (30P) of the exchanger-evaporator (30) with the vapour loaded with solvents (VTS) at the outlet of the second distillation column (20), in order to supply the heat necessary for the vaporisation of the liquid (LV) provided in order to form the transport vapour (VT),
(h) compressing the transport vapour (VT) upstream or downstream of the exchanger-evaporator (30), by compressor means (40) in order to increase the entropy of the transport vapour (VT) used during steps (c) and (g),
(i) feeding the first distillation column (10) and the second distillation column (20) with the transport vapour (VT) produced in step (d).

2. Method according to claim 1, wherein the transport vapour (VT) and/or the liquid (LV) intended to be vaporised are purged from the exchanger-evaporator (30) by means of a purge system (60) during a step (j).

3. Method according to claim 1, wherein the non-volatile impurities of the raw liquid (LB) with which the installation (1) is fed during step (b) comprise a salt, such as sodium chloride or potassium chloride.

4. Method according to claim 1 or 2, wherein the non-volatile impurities of the raw liquid (LB) with which the installation (1) is fed during step (b) comprise a fouling material.

5. Installation for processing liquids (1), in particular such as effluents, containing dissolved solvents and non-volatile impurities, comprising:
- a device for generating transport vapour (30),
- means (11) for conveying liquids in the installation (1), provided to convey raw liquids (LB), not processed in the installation (1), containing non-volatile impurities,
- a first distillation column (10), referred to as the raw liquid distillation column, forming at least one vertical processing chamber,
- means (11) for introducing a liquid to be processed, high up, in said first distillation column (10),
- run-off support means (12) inside said at least one vertical processing chamber for slowing the fall of liquid and increasing the gas/liquid exchange surface in said chamber,
- means (13) for introducing the transport vapour (VT), in the lower part of the first distillation column (10),
- means (14) for recovering the processed liquid having fallen in the lower part of the first distillation column (10),
- means (15) for evacuating the processed liquid having fallen in the lower part of the first distillation column (10),
said installation further comprising:
- a second distillation column (20), referred to as the condensate distillation column, forming at least one vertical processing chamber,
- means (21) for introducing a liquid to be processed, high up, in said second distillation column (20),
- run-off support means (22) inside said at least one vertical processing chamber for slowing the fall of liquid and increasing the gas/liquid exchange surface in said chamber,
- means (23) for introducing the transport vapour (VT), in the lower part of the second distillation column (10),
- means (24) for recovering the processed liquid having fallen in the lower part of the second distillation column (20),
installation in which said device (30) for generating the transport vapour (VT) has means (33) for recovering the heat of the transport vapour (VTS) leaving said first distillation column (10) and said second distillation column (20) in order to vaporise a liquid to be vaporised, said device (30) comprising:
- an exchanger-evaporator (30) equipped with a primary (30P) and a secondary (30S), comprising an inlet (31) for the liquid to be vaporised, an inlet (33) for a hot flow made up of said transport vapour (VTS) loaded with solvents leaving the first distillation column (10) and the second distillation column (20), an outlet for the transport vapour (VT) generated in the secondary (30S) of the exchanger-evaporator (30) feeding said first distillation column (10) and said second distillation column (20), and an outlet (34) for the condensate loaded with solvents (CS) resulting from the condensation of the transport vapour (VTS) leaving the first distillation column (10) and the second distillation column (20) in the primary (30P) of the exchanger-evaporator,
- compressor means (40) in order to compress either the transport vapour (VT) generated in the secondary (30S) of the exchanger-evaporator (30), downstream of said exchanger-evaporator (30), or the transport vapour (VTS) leaving said first distillation column (10) and said second distillation column (20), upstream of said exchanger-evaporator (30),
installation in which:
- only said first distillation column (10) receives the raw liquids (LB), via the means (11) for conveying raw liquids (LB) in the installation (1), the raw liquids (LB) being fed into the upper part of the first distillation column (10) by the means (11) for introducing a liquid to be processed (LB), and the liquids purified of solvents (LI) recovered in the low part of the first distillation column (10), containing non-volatile impurities, being evacuated via the evacuation means (15), without being transmitted to the second distillation column (20) or to the exchanger-vaporiser (30),
- said second distillation column (20) receives the condensate (CS) formed in the primary (30P) of the exchanger-evaporator (30), containing the solvents, the condensate (CS) being fed into the upper part of the second distillation column (20) via means (21) for introducing a liquid to be processed,
- the secondary (30S) of the exchanger-evaporator (30) is fed with liquid to be vaporised (LV) at the inlet (31) for the liquid to be vaporised by the liquid (LV) recovered in the lower part of the second distillation column (20) via the means (24) for recovering liquid to be vaporised (LV),
- the exchanger-evaporator (30) has, in addition, a dewatering outlet (36) for the transport vapour (VTCS) having contributed its heat to said exchanger-evaporator, and heavily loaded with solvents, and in which a condensation device (50), separate from said exchanger-evaporator (30), can condense the vapour (VTCS) coming from said dewatering outlet (36).

6. Installation (1) according to claim 5, wherein the exchanger-evaporator (30) takes the form of evaporation tubes (37) arranged substantially vertically in a heating chamber (38) and having means (33) for introducing the recovered transport vapour (VTS) into the chamber (38) and heating the outer wall of said evaporation tubes (37), means (39s) for introducing the liquid to be vaporised (LV) into the evaporation tubes (37) in their upper part, and means (39i) for recovering the liquid (LV) having passed through the evaporation tubes, the primary (30P) of the exchanger being defined by the volume of the heating chamber (38) outside the tubes (37), the secondary (30S) being defined inside the tubes (37).
